# EUROPÄISCHE PATENTSCHRIFT

(11) **EP 0 950 209 B1**
(45) Veröffentlichungstag und Bekanntmachung des Hinweises auf die Patenterteilung: **13.09.2000**
(21) Anmeldenummer: 97954337.8
(22) Anmeldetag: 23.12.1997
(51) Int. Cl.: G02B 26/10

(54) **VORRICHTUNG ZUR ABLENKUNG VON LICHTSTRAHLEN**
DEVICE FOR DEFLECTING LIGHT BEAMS
DISPOSITIF DE DEVIATION DE FAISCEAUX LUMINEUX

(30) Priorität: 27.12.1996 DE 19654845
(43) Veröffentlichungstag der Anmeldung: 20.10.1999
(73) Patentinhaber: Chromatron Laser Systems GmbH, 10783 Berlin (DE)
(72) Erfinder: KUNTZE, Andreas, D-10625 Berlin (DE)
(74) Vertreter: Ninnemann, Detlef, Dipl.-Ing.
(86) Internationale Anmeldenummer: DE9703033
(87) Internationale Veröffentlichungsnummer: WO9829774

(56) Entgegenhaltungen:
- EP-A- 0 588 490
- WO-A-95/02243
- US-A- 5 153 870
- US-A- 5 319 509

## Beschreibung

Die Erfindung betrifft eine Vorrichtung zur Ablenkung von Lichtstrahlen, insbesondere von Laserstrahlen, nach dem Oberbegriff des Anspruchs 1.

Eine solche Vorrichtung dient beispielsweise zur präzisen Führung eines Laserstrahls auf ein zu bearbeitendes Werkstück, zur Erzeugung von Grafiken, zum Beschriften von Gegenständen mittels Laser usw.

Aus der Offenlegungsschrift DE 41 02 936 A1 ist eine Einrichtung zur Materialbearbeitung durch einen polarisations-modulierten Laserstrahl bekannt, die einen Laser, einen Phasenmodulator, zwei um unterschiedliche Achsen drehbare Umlenkspiegel sowie eine Fokussierungslinse umfaßt. Durch eine geeignete Einstellung der beiden drehbaren Umlenkspiegel kann der Laserstrahl mittels der Fokussierungslinse auf jeden beliebigen Punkt einer Fläche vorgegebener Größe fokussiert werden. Dadurch lassen sich Materialien gezielt mittels eines Laserstrahls bearbeiten.

Aus der Offenlegungsschrift DE 39 39 866 A1 ist eine Vorrichtung zum Beschriften einer Zylindermantelfläche mittels Lasergravur bekannt. Mit dieser kann eine Zylindermantelfläche beschriftet werden, ohne daß das Werkstück relativ zu dem Laserstrahl bewegt werden müßte. Dazu ist ein rotationssymmetrischer Ringspiegel vorgesehen, dessen Symmetrieachse mit der Symmetrieachse der auf einem Zylindermantel liegenden Beschriftungsfläche zusammenfällt. Der rotationssymmetrische Ringspiegel weist eine gekrümmte Spiegelfläche auf. Mit Hilfe einer Ablenkeinheit, die aus zwei in senkrecht zueinander stehenden Achsen beweglichen Umlenkspiegeln besteht, wird ein von einer Laserstrahlquelle abgegebener Laserstrahl von der Spiegelfläche auf die Beschriftungsfläche gelenkt.

Aus der DE 39 15 254 A1 sind ein Verfahren und eine Vorrichtung zur Erzeugung einer optischen Markierung auf dem Fußboden publikumsfrequentierter Bereiche bekannt. Dabei wird ein gebündelter, eine vorgegebene Bahn zyklisch durchwandernder Lichtstrahl, z.B. ein Laserstrahl, auf einen Bodenbelag projiziert. Die Lichtablenkungsvorrichtung, die den Lichtstahl entlang der vorgegebenen Bahn bewegt, wird mit einer so hohen Frequenz gesteuert, daß die auf dem Bodenbelag erzeugte Markierung stationär erscheint.

Den vorstehend beschriebenen Ablenksystemen, wie auch einer Vielzahl weiterer ähnlicher Vorrichtungen, ist gemein, daß der Fokus eines Laserstrahls präzise und/oder mit hoher Geschwindigkeit entlang einer bestimmten Bahn geführt werden soll. Dies setzt eine entsprechend genaue und schnelle Verstellbarkeit der zugehörigen Ablenkelemente (Spiegel oder dergl.) voraus. Die Verstellung der Ablenkelemente erfolgt dabei in der Regel durch Drehung um eine vorgegebene Achse.

Zur Herstellung von Ablenkvorrichtungen der beschriebenen Art ist ein Antrieb notwendig, mit dem die Position (insbesondere der Drehwinkel) eines Ablenkelements mit großer Geschwindigkeit hochgenau eingestellt werden kann. Ein solcher Antrieb bildet einen erheblichen Kostenfaktor.

Der Erfindung liegt die Aufgabe zugrunde, eine Vorrichtung zur Ablenkung von Lichtstrahlen der eingangs genannten Art zu schaffen, deren Ablenkelemente mit möglichst kostengünstigen Mitteln sehr präzise und mit großer Geschwindigkeit verstellt werden können.

Diese Aufgabe wird erfindungsgemäß durch eine Vorrichtung mit den Merkmalen des Anspruchs 1 gelöst.

Danach ist vorgesehen, daß die Antriebseinheiten der Ablenkelemente jeweils durch den Antriebsmotor und den Aktuator eines Schreib-/Lesekopfes eines Datenspeichers mit einem rotierenden, scheibenförmigen Datenträger gebildet werden, wobei die Drehachsen der Ablenkelemente durch Aktuatorachsen gebildet werden.

Derartige Datenspeicher werden in riesigen Stückzahlen hergestellt. Dies gilt insbesondere für Diskettenlaufwerke und Festplattenlaufwerke von Datenverarbeitungsanlagen, die vorliegend von besonderem Interesse sind. Jedes dieser Laufwerke verfügt über einen Schreib-/Lesekopf, der mit einem geeigneten Antrieb über der rotierenden Diskette bzw. Festplatte bewegt werden kann. Bei diesen Antrieben sind hohe Genauigkeit und große Geschwindigkeiten eine besonders wichtige Eigenschaft, um eine große Speicherkapazität und kurze Zugriffszeiten zu ermöglichen.

Die drei wesentlichen vorgenannten Eigenschaften der Antriebe von Schreib-/Leseköpfen, nämlich niedrige Kosten durch hohe Stückzahlen, hohe Genauigkeit und große Geschwindigkeit, werden erfindungsgemäß genutzt, um einen genauen, schnellen und kostengünstigen Antrieb für ein Ablenksystem zu schaffen.

Zwar ist es aus der US-PS 5,319,509 bekannt, einen Umlenkspiegel auf dem Aktuator eines Datenspeiches anzuordnen, um einen Laserstrahl zu reflektieren; jedoch wird hier der reflektierte Laserstrahl unmittelbar zu einem in dem Datenspeicher angeordneten Detektor weitergeleitet, wo dessen Reflexionswinkel zur Steuerung der Bewegung des Aktuators ausgewertet wird. Es findet sich in dieser Druckschrift kein Hinweis, den reflektierten Laserstrahl zu einem weiteren Ablenkspiegel zu leiten, der ebenfalls mit einem Aktuator gekoppelt ist, um so eine Vorrichtung zur Materialbearbeitung und/oder Erzeugung von Grafiken zu schaffen.

Weiter sind aus der WO 95/02243 und der US-PS 5,153,870 optische Datenpeicher bekannt, bei denen ein Laserstahl von einem auf dem Aktuator des jeweiligen Datenspeichers angeordneten Umlenkspiegel reflektiert und dann zum Schreib-/Lesekopf des Aktuators weitergeleitet wird. Auch hier verbleibt aber der Laserstrahl innerhalb des Datenspeichers.

Gemäß einer Variante der Erfindung weist die Antriebseinheit für das Ablenkelement den Antriebsmotor des Schreib-/Lesekopfes eines Datenspeichers mit austauschbarem Datenträger (Diskette, Wechselfestplatte) auf. Diese Variante hat den Vorteil, daß wegen der Austauschbarkeit des Datenträgers das jeweilige Laufwerk nicht hermetisch von der Außenwelt abgeschirmt wird und daher in der Regel sehr robust ausgebildet ist.

Andererseits zeichnen sich gerade die Schreib-/Leseköpfe von Datenspeichern mit festem Datenträger (Festplatten) durch besonders große Geschwindigkeit und Genauigkeit aus. Für Ablenksysteme, an die besonders hohe Anforderungen gestellt werden, ist daher die Verwendung einers derartigen Antriebs vorteilhaft.

Zum Antrieb des Ablenkelements kann im Rahmen der vorliegenden Erfindung sowohl ein Schrittmotor als auch ein kontinuierlicher Antrieb (Linearmotor) verwendet werden. Schrittmotoren zeichnen sich durch große Robustheit und durch die Möglichkeit einer absoluten Positions- bzw. Winkeleinstellung aus. Kontinuierliche Motoren ermöglichen eine größere Genauigkeit und Schnelligkeit beim Verstellen von Bauteilen; jedoch kann die Position eines Bauteils mit diesen Motoren in der Regel nicht absolut eingestellt werden. Es ist eine Rückkopplung erforderlich, mit der die absolute Position bestimmbar ist. Bei Festplattenlaufwerken sind hierzu sogenannte Servospuren und ein Servokopf vorgesehen, die nicht der Speicherung von Daten, sondern ausschließlich der Bestimmung der jeweiligen Absolutposition der Schreib-/Leseköpfe dienen. Vergleichbare Einrichtungen zur Positionsbestimmung müssen auch bei der Verwendung eines kontinuierlichen Antriebs eines Schreib-/Lesekopfes zum Verstellen eines Ablenkelements vorgesehen sein.

Erfindungsgemäß wird für die Antriebseinheit des Ablenkelements nicht nur der Antriebsmotor eines magnetischen Datenspeichers sondern auch zumindest ein Teil der Vorrichtung zur Umsetzung der Antriebskraft dieses Motors in eine Kopfbewegung (z.B. die Aktuatorachse und ein um diese Achse verschwenkbarer Zugriffsarm) verwendet. So können z.B. der Motor, der komplette Aktuator und ggf. der Laufwerkscontroller des magnetischen Datenspeichers zur Bildung der Antriebseinheit des Ablenkelements verwendet werden.

Eine besonders einfache Ankopplung eines drehbaren Ablenkelements an den Antrieb eines Schreib-/Lesekopfes eines magnetischen Datenspeichers ist möglich, wenn dieser Antrieb einen Aktuator in rotierender Ausführung aufweist. Als Aktuator werden diejenigen Antriebselemente des magnetischen Datenspeichers bezeichnet, die die Antriebskraft des Motors in eine Kopfbewegung umsetzen. Ein Aktuator in rotierender Ausführung weist einen Zugriffsarm auf, der an einem Ende um eine Achse verschwenkbar ist und an seinem anderen Ende die Schreib-/Leseköpfe trägt. Wird ein Ablenkelement mit einem derartigen Zugriffsarm im Bereich der Aktuatorachse verbunden, so führt das Ablenkelement beim Verschwenken des Zugriffsarms eine reine Drehbewegung aus.

In diesem Zusammenhang sei darauf hingewiesen, daß hier der Begriff Linearmotor zur Bezeichnung kontinuierlicher Motoren verwendet wird, die wiederum sowohl zusammen mit Aktuatoren in linearer Ausführung als auch mit Aktuatoren in rotierender Ausführung eingesetzt werden können. In Festplattenlaufwerken wird überwiegend ein Linearmotor zusammen mit einem Aktuator in rotierender Ausführung eingesetzt, um eine bogenförmige Bewegung der Schreib-/Leseköpfe zu erzeugen.

Zur Verbindung eines Ablenkelements mit dem Zugriffsarm eines Aktuators eignet sich insbesondere ein stabförmiges Bauelement, das senkrecht von dem Arm absteht. Das Ablenkelement selbst ist vorzugsweise als Spiegel ausgebildet.

Selbstverständlich kann bei Verwendung eines Antriebs für Schreib-/Leseköpfe zum Bewegen eines Ablenkelements der Zugriffsarm auch durch ein anderes das Ablenkelement tragende Bauteil ersetzt werden, welches in entsprechender Weise auf der Aktuatorachse gelagert wird.

Insbesondere bei der Verwendung eines kontinuierlichen Antriebs zur Bewegung des Ablenkelements ist es vorteilhaft, wenn eine Sensor-Baugruppe zur Ermittlung von Winkel und/oder Position des Ablenkelements vorgesehen ist. Diese kann darüber hinaus auch zur Ermittlung der Geschwindigkeit dienen. Dabei kann ein Element der Sensor-Baugruppe mit einem gemeinsam mit dem Ablenkelement beweglichen Bauteil verbunden sein, während ein anderes Element der Sensor-Baugruppe mit einem stationären Bauteil verbunden ist.

Als Sensoren eignen sich grundsätzlich alle Sensor-Typen, die eine hochgenaue Bestimmung der Position und/oder der Winkellage eines Bauteils ermöglichen, z.B. optische, magnetische und kapazitive Sensoren.

Die Sensor-Baugruppe wird in einen Regelkreis integriert, der laufend die aktuelle Position des Ablenkelements mit dessen Soll-Position vergleicht und die jeweils notwendigen Korrekturen bei der Bewegung des Ablenkelements veranlaßt.

Es kann vorgesehen sein, daß die elektronische Steuer- bzw. Regeleinheit, mit der die Bewegung des Ablenkelements gesteuert bzw. geregelt wird, den Laufwerkscontroller eines magnetischen Datenspeichers umfaßt. In diesem Fall werden also nicht nur elektromechanische Bauteile (Motor und Aktuator) eines Datenspeichers, sondern auch dessen Steuerung (Laufwerkscontroller) für die Einstellung eines Ablenkelements verwendet. Je nach Bedarf umfaßt die Steuereinheit des Ablenkelements im Einzelfall noch weitere Prozessoren und Datenspeicher, die die gewünschte Steuerung des Ablenksystems gestatten.

Wie bereits eingangs erwähnt wurde, läßt sich das erfindungsgemäße Ablenksystem überall dort anwenden, wo Laserstrahlen präzise und/oder mit hoher Geschwindigkeit zu unterschiedlichen Punkten geführt werden sollen. Beispiele hierfür sind die Materialbearbeitung durch Laserstrahlen, die Erzeugung von Grafik durch Laserstrahlen sowie die Beschriftung mittels Laserstrahlen.

Weitere Vorteile der Erfindung werden bei der nachfolgenden Beschreibung eines Ausführungsbeispiels anhand der Figuren deutlich werden. Es zeigen:
- Figur 1 -: eine schematische Darstellung eines Ablenksystems für Laserstrahlen mit zwei Umlenkspiegeln, die um unterschiedliche Achsen drehbar sind;
- Figur 2 -: eine schematische Darstellung eines Festplattenlaufwerks, dessen Schreib-/Lesekopf durch einen Aktuator mit Schrittmotor bewegt wird;
- Figur 3 -: eine Darstellung der erfindungsgemäßen Ablenkvorrichtung für ein Ablenksystem gemäß Figur 1 unter Verwendung der in Figur 2 dargestellten Antriebseinheit für einen Schreib-/Lesekopf;
- Figur 4 -: eine schematische Darstellung eines Festplattenlaufwerks, dessen Schreib-/Lesekopf durch einen Aktuator mit Linearmotor bewegt wird;
- Figur 5 -: eine Darstellung der erfindungsgemäßen Ablenkvorrichtung für ein Ablenksystem gemäß Figur 1 unter Verwendung der in Figur 4 dargestellten Antriebseinheit für einen Schreib-/Lesekopf.

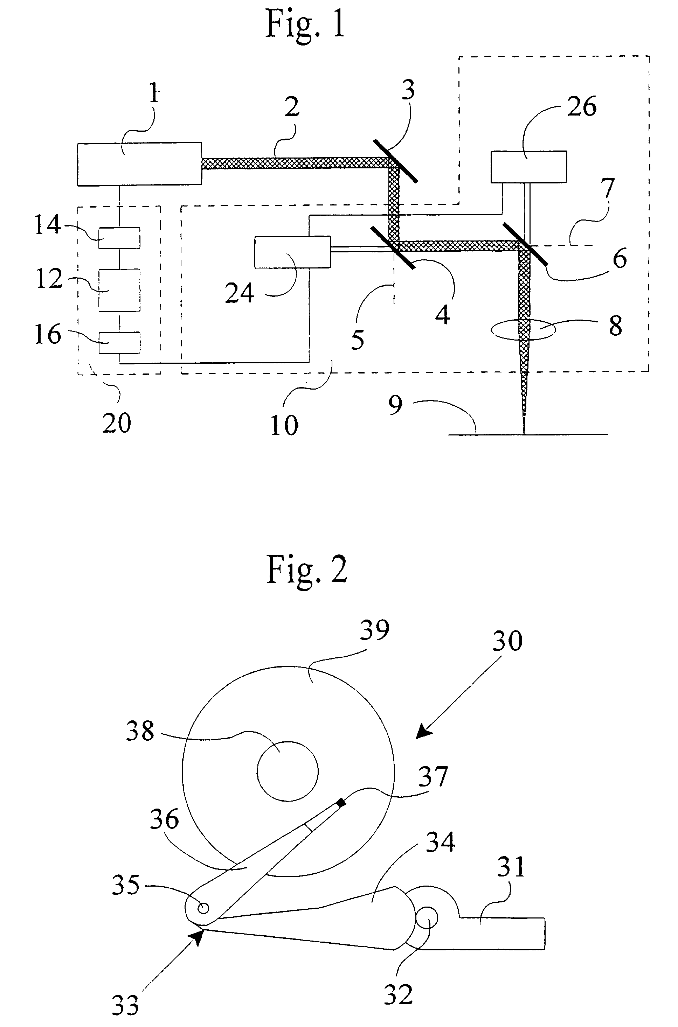

In Figur 1 ist ein Ablenksystem 10 für den Laserstrahl 2 eines Lasers 1 dargestellt, mit dem auf einer Oberfläche 9 eine Markierung, Grafik, Beschriftung o.ä. erzeugt werden soll. Dabei kann es sich sowohl um eine Vorrichtung zur Materialbearbeitung handeln, wobei die Oberfläche 9 z.B. durch die Oberfläche eines Werkstücks gebildet wird, als auch um eine Vorrichtung zur Erzeugung eines stehenden Bildes, wobei die Oberfläche 9 durch ein reflektierendes Material gebildet wird.

Bei dem Laser 1 kann es sich beispielsweise um einen Nd:YAG-Laser handeln, dessen Laserstrahl 2 mittels eines ersten Umlenkspiegels 3 zu dem Ablenksystem 10 geführt wird. Das Ablenksystem 10 umfaßt zwei weitere Umlenkspiegel 4, 6, die um jeweils eine Drehachse 5 bzw. 7 drehbar sind. Die Drehachsen 5, 7 der beiden Umlenkspiegel 4, 6 stehen senkrecht aufeinander.

Mittels der beiden Umlenkspiegel 4, 6 läßt sich die gewünschte Orientierung des Laserstrahls 2 erreichen, so daß dieser auf einen beliebigen Punkt eines vorgegebenen zweidimensionalen Bereiches 9 konzentriert werden kann. Selbstverständlich sind auch Ablenksysteme mit mehr als zwei Umlenkspiegeln und entsprechend mehr Freiheitsgraden für die Orientierung des Laserstrahls denkbar.

Nach der Umlenkung durch die beiden Spiegel 4, 6 passiert der Laserstrahl 2 eine Planfeldfokussieroptik 8, durch die sichergestellt wird, daß der Fokuspunkt des Laserstrahls stets in der gewünschten Ebene 9 liegt.

Wie anhand der Figur 1 weiter erkennbar ist, ist jedem der Umlenkspiegel 4, 6 eine Antriebseinheit 24, 26 zugeordnet, die durch eine Steuereinheit 20 gesteuert wird.

Die Steuereinheit 20 umfaßt einen Mikrorechner 12 mit entsprechenden Bedienelementen zur Eingabe von Steuerbefehlen, eine Lasersteuerung 14, mit der der Betrieb des Lasers 1 geregelt wird, sowie eine Spiegelsteuerung 16, mit der die Einstellung der Umlenkspiegel 4, 6 durch die Antriebseinheiten 24, 26 gesteuert wird.

Die Steuereinheit 20 kann z.B. durch einen PC oder dergl. gebildet werden, wobei die Lasersteuerung 14 und die Spiegelsteuerung 16 durch entsprechende Software realisiert werden. Soweit zur Steuerung von Laser 1 oder Umlenkspiegel 4, 6 noch zusätzlich Hardwarekomponenten erforderlich sind, werden diese an den PC angeschlossen.

Das vorbeschriebene Ablenksystem 10 ist in seinem Aufbau grundsätzlich bekannt. Der wesentliche Unterschied des erfindungsgemäßen Ablenksystems im Vergleich zu den bekannten Ablenksystemen liegt darin, daß vorliegend die Antriebseinheiten 24, 26 der Umlenkspiegel 4, 6 durch jeweils einen Antrieb eines Schreib-/Lesekopfes für magnetische Datenspeicher gebildet werden.

Figur 2 zeigt eine schematische Darstellung eines Festplattenlaufwerks in Draufsicht, anhand der die zur Verstellung der Umlenkspiegel verwendeten Antriebselemente für Schreib/Leseköpfe erkennbar sind.

Das Festplattenlaufwerk 30 umfaßt einen Schrittmotor 31 mit einer Motorwelle 32, einen Aktuator 33, der mit dem Schrittmotor 31 in Wirkverbindung steht und der Schreib-/Leseköpfe 37 trägt, sowie eine Festplatte 39, die auf der Spindelwelle 38 eines (nicht dargestellten) Spindelmotors rotiert.

Der Aktuator 33 besteht aus einem Antriebshebel 34, der mit der Motorwelle 32 des Schrittmotors 31 (z.B. reibschlüssig oder über eine Verzahnung) in Eingriff steht, und aus einem Zugriffsarm 36, der durch die motorgetriebene Bewegung des Antriebshebels 34 um eine Aktuatorachse 35 verschwenkbar ist und der an seinem vorderen Ende die Schreib-/Leseköpfe 37 trägt. Der Schrittmotor 31 wird von einem nicht dargestellten Laufwerkscontroller derart gesteuert, daß die Schreib-/ Leseköpfe 37 zum Lesen oder Speichern von Daten eine bestimmte, vorgebbare Position über der Festplatte 39 einnimmt. Der Laufwerkscontroller kann entweder in einen Mikrorechner oder auch in das Festplattenlaufwerk selbst integriert sein; im letzteren Fall wird von einem intelligenten Laufwerk gesprochen.

Von besonderer Bedeutung bei Festplattenlaufwerken ist, daß mit den Schreib-/Leseköpfen 37 sehr präzise bestimmte Zonen auf der Festplatte 39 angefahren werden können. Dies muß zudem in sehr kurzen Zeiten geschehen, um die Zugriffszeit auf die Daten zu minimieren. Diese Eigenschaften von Festplattenlaufwerken lassen sich in hervorragender Weise für die Steuerung von Umlenkspiegeln für Ablenksysteme nutzen.

In diesem Zusammenhang sei darauf hingewiesen, daß es sich bei dem in Figur 2 dargestellten Festplattenlaufwerk lediglich um eine beispielhafte Variante handelt. Zur Verwirklichung der Erfindung können auch andere Festplatten- oder Diskettenlaufwerke verwendet werden, einschließlich Abtasteinrichtungen audiovisueller Laufwerke (z.B. CD-ROM). Es können auch solche Abtasteinrichtungen verwendet werden, die zukünftig angeboten werden und die Anforderungen an eine präzise und schnelle Positionierung erfüllen.

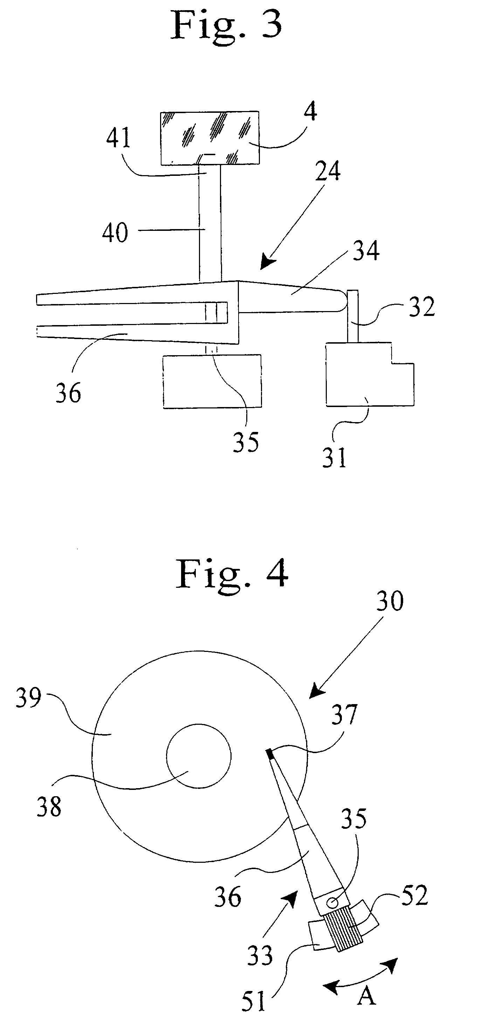

Anhand Figur 3 wird deutlich, wie das in Figur 2 dargestellte Laufwerk 30 als Antriebseinheit 24 zur Einstellung der Position eines Umlenkspiegels 4 verwendet werden kann.

Figur 3 zeigt in Seitenansicht den Schrittmotor 31 eines Laufwerks 30 gemäß Figur 2, dessen Motorwelle 32 mit dem Antriebshebel 34 eines Aktuators in (hier nur schematisch angedeuteter) Wirkverbindung steht. Von dem um die Aktuatorachse 35 verschwenkbaren Zugriffsarm 36 steht senkrecht nach oben ein stabförmiges Element 40 ab, an dessen oberem Ende 41 ein Umlenkspiegel 4 angebracht ist.

Das stabförmige Element 40 ist konzentrisch bezüglich der Aktuatorachse 35 orientiert. Demnach bildet die Mittellinie der Aktuatorachse 35 zugleich auch die Mittellinie des stabförmigen Elements 40.

Durch die vorbeschriebene Anordnung des stabförmigen Elements 40 wird jede von dem Schrittmotor 31 hervorgerufene Schwenkbewegung des Arms 36 in eine reine Drehbewegung des Umlenkspiegels 4 umgesetzt. Die Drehbewegungen können mit hoher Geschwindigkeit und hoher Präzision (Winkelgenauigkeit) durchgeführt werden; denn bei der in Figur 3 dargestellten Antriebseinheit 24 handelt es sich um die Antriebseinheit eines Schreib-/ Lesekopfes für magnetische Datenspeicher. Bei diesen sind hohe Geschwindigkeit und Genauigkeit Voraussetzungen, um sie überhaupt zum Schreiben und/oder Lesen von Daten verwenden zu können.

Zur Steuerung des Schrittmotors 31, kann ein programmierbarer Rechner verwendet werden, der über Bedienelemente zur Eingabe der notwendigen Steuerbefehle verfügt. Zur Umsetzung der Steuerbefehle aus dem Mikrorechner und zu deren Übertragung auf die Elektronik des Schrittmotors 31 kann ein Laufwerkscontroller als Teil der Spiegelsteuerung verwendet werden; vergl. die Steuereinheit 20 in Figur 1, die einen Mikrorechner 12 und eine Spiegelsteuerung 16 aufweist. Der Laufwerkscontroller, der bei der konventionellen Anwendung der Antriebseinheit 24 zum Bewegen von Schreib-/Leseköpfen als Bindeglied zwischen dem Rechner und dem magnetischen Datenspeicher dient, kann auch dann als ein entsprechendes Bindeglied dienen, wenn die Antriebseinheit 24 zur Einstellung eines Umlenkspiegels benutzt wird.

Figur 4 zeigt eine schematische Darstellung eines Festplattenlaufwerks 30 in Draufsicht, bei dem zum Antrieb der Schreib-/Leseköpfe 37 ein Aktuator 33 in rotierender Ausführung mit einem Linearmotor 51, 52 vorgesehen ist. Der Linearmotor 51, 52 umfaßt als wesentliche Bauteile einen stationären Permantentmagneten 51 und eine auf diesem entlang der Richtung A verschiebbare Spule 52, wobei letztere an dem Zugriffsarm 36 der Schreib-/Leseköpfe 37 befestigt ist.

Abgesehen von der Ausbildung des Antriebs 51, 52 des Zugriffsarms 36 stimmt das in Fig. 4 dargestellte Festplattenlaufwerk 30 mit dem in Fig. 2 gezeigten überein; gleiche Bauteile sind in den beiden Figuren jeweils mit identischen Bezugszeichen versehen.

Bei Betätigung des Antriebs 51, 52 schwenkt der Zugriffsarm 36 um die ortsfeste Achse 35, so daß die Schreib-/Leseköpfe 37 kontinuierlich zu einer definierten Position über der Festplatte 39 bewegt werden können. Da die Hebellänge (Aktuatorachse 35 - Schreib-/Leseköpfe 37) erheblich größer ist als die Hebellänge (Aktuatorachse 35 - Spule 52), wird dabei eine geringe Spulenbewegung in eine große Kopfbewgung umgesetzt, so daß bei nur geringer Stromaufnahme durch die Spule 52 sehr kurze Positionierzeiten erreicht werden.

Bei Festplattenlaufwerken der in Fig. 4 dargestellten Art ist in der Regel einer der Schreib-/Leseköpfe als Servokopf ausgebildet, dem eine sogenannte Servo- oder Indexspur der Festplatte zugeordnet ist. Die Servorspur bildet eine Referenzspur, anhand der der Servokopf die Positionierung der Schreib-/Leseköpfe über der Festplatte erkennt. Hierdurch wird eine extrem genaue Regelung der Bewegung der Schreib-/Leseköpfe und deren exakte Positionierung über der Festplatte ermöglicht. Alternativ kann eine separate Sensor-Baugruppe vorgesehen sein, die die jeweilige Position des Zugriffsarms detektiert.

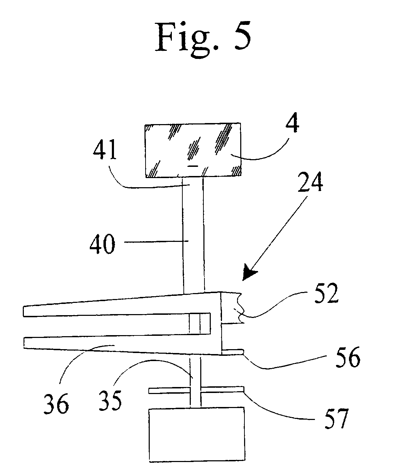

Fig. 5 zeigt in Seitenansicht ein Beispiel eines Ablenksystems für einen Umlenkspiegel 4, bei dem der in Fig. 4 dargestellte (kontinuierliche) Linearantrieb 51, 52 zur Bewegung des Arms 36 um die Achse 35 verwendet werden kann, wobei in Fig. 5 auf die detaillierte Darstellung des Linearantriebs 51, 52 verzichtet wurde.

Die Verbindung zwischen dem Zugriffsarm 36 und dem Umlenkspiegel 4 erfolgt vorliegend in gleicher Weise wie bei dem Ausführungsbeispiel gemäß Fig. 3. Auch die Bewegung des Umlenkspiegels 4 entspricht der anhand der Fig. 3 erläuterten.

Bei dem vorliegenden Ausführungbeispiel trägt jedoch der Zugriffsarm 36 zusätzlich einen Sensor 56 (z.B. einen optischen Sensor), dem ein ortsfester (z.B. an der Achse 35 befestigter) Winkelmaßstab 57 zugeordnet ist. Dadurch können der Drehwinkel und die Drehgeschwindigkeit des Zugriffsarms 36 und damit des Umlenkspiegels 4 jederzeit bestimmt und über einen entsprechenden Regelkreis mit Hilfe des in Fig. 4 dargestellten Antriebs 51, 52 hochgenau eingestellt werden.

Bei Verwendung eines solchen Sensor-geregelten Antriebs 24 in einem Ablenksystem 10 gemäß Fig. 1 muß der Steuerkreis 16, 24 durch einen entsprechenden Regelkreis ersetzt werden, so daß die Sensorsignale zur Regelung der Bewegung des Umlenkspiegels 4 genutzt werden können. (Das Blockschaltbild aus Fig. 1 bleibt hierbei identisch; lediglich die Funktion des Blockes 16 wandelt sich von einer Steuer- zu einer Regeleinrichtung.)

Als Sensoren eigenen sich nicht nur optische sondern z.B. auch magnetische oder kapazitive Baugruppen. Die beiden Bauelemente 56 bzw. 57 der Sensorbaugruppe 56, 57 können dabei an beliebigen Bauteilen befestigt werden, die beim Verschwenken des Umlenkspiegels 4 zueinander bewegt werden.

Die Sensorbaugruppe 56, 57 kann bereits in den verwendeten Antrieb der Schreib-/Leseköpfe eines Datenspeichers eingebaut sein oder auch nachträglich hinzugefügt werden.

## Patentansprüche

1. Vorrichtung zur Materialbearbeitung und/oder Erzeugung von Zeichen durch Laserstrahlen mit zwei um unterschiedliche Achsen (5, 7) drehbaren Ablenkelementen (4, 6) zum Ablenken der Laserstrahlen (2), die hintereinander im Strahlengang der Laserstrahlen (2) angeordnet sind und die mit jeweils einer Antriebseinheit (24, 26) in Wirkverbindung stehen, mittels der sie um ihre jeweilige Drehachse (5, 7) verschwenkbar sind,
**dadurch gekennzeichnet,**
daß die Antriebseinheiten (24, 26) jeweils durch den Antriebsmotor (31; 51, 52) und den Aktuator (33) eines Schreib-/Lesekopfes eines Datenspeichers mit einem rotierenden, scheibenförmigen Datenträger gebildet werden, wobei die Drehachsen (5, 7) der Ablenkelemente (4, 6) durch Aktuatorachsen gebildet werden.

2. Vorrichtung nach Anspruch 1, **dadurch gekennzeichnet,** daß die Antriebseinheit (24, 26) einen Schrittmotor (31) umfaßt.

3. Vorrichtung nach Anspruch 1, **dadurch gekennzeichnet,** daß die Antriebseinheit (24, 26) einen kontinuierlichen Motor (51, 52) umfaßt.

4. Vorrichtung nach mindestens einem der vorhergehenden Ansprüche, **dadurch gekennzeichnet,** daß die Antriebseinheit (24, 26) einen um eine Achse (35) verschwenkbaren Arm (36) aufweist, mit dem das Ablenkelement (4, 6) verbunden ist.

5. Vorrichtung nach Anspruch 4, **dadurch gekennzeichnet,** daß das Ablenkelement (4) mit dem verschwenkbaren Arm (36) derart verbunden ist, daß es beim Verschwenken des Armes (36) eine reine Drehbewegung ausführt.

6. Vorrichtung nach Anspruch 4 oder 5, **dadurch gekennzeichnet,** daß das Ablenkelement (4) mit dem verschwenkbaren Arm (36) über ein stabförmiges Bauelement (40) verbunden ist.

7. Vorrichtung nach mindestens einem der vorhergehenden Ansprüche, **dadurch gekennzeichnet,** daß das Ablenkelement (4) mit einem Zugriffsarm (36) des Schreib-/Lesekopfes (37) verbunden ist.

8. Vorrichtung nach mindestens einem der vorhergehenden Ansprüche, **dadurch gekennzeichnet,** daß eine Sensor-Baugruppe (56, 57) zur Ermittlung von Winkel und/oder Position und/oder Geschwindigkeit des Ablenkelements (4, 6) vorgesehen ist.

9. Vorrichtung nach Anspruch 8, **dadurch gekennzeichnet,** daß ein Element (56) der Sensor-Baugruppe (56, 57) mit einem gemeinsam mit dem Ablenkelement (41) beweglichen Bauteil (36) verbunden ist und ein anderes Element (57) der Sensor-Baugruppe (56, 57) mit einem stationären Bauteil (35) verbunden ist.

10. Vorrichtung nach Anspruch 8 oder 9, **dadurch gekennzeichnet,** daß die Sensor-Baugruppe (56, 57) in einen Regelkreis (20, 24) zur Regelung der Bewegung des Ablenkelements (4) integriert ist.

11. Vorrichtung nach mindestens einem der vorhergehenden Ansprüche, **dadurch gekennzeichnet,** daß das Ablenkelement (4, 6) als Spiegel ausgebildet ist.

12. Vorrichtung nach mindestens einem der vorhergehenden Ansprüche, **dadurch gekennzeichnet,** daß die Antriebseinheit (24, 26) mit einer elektronischen Steuer- oder Regeleinheit (20) in Wirkverbindung steht.

13. Vorrichtung nach Anspruch 12, **dadurch gekennzeichnet,** daß die elektronische Steuer- oder Regeleinheit (20) den Laufwerkscontroller (16) eines Datenspeichers umfaßt.

14. Vorrichtung nach mindestens einem der vorhergehenden Ansprüche, **dadurch gekennzeichnet,** daß sie als Beschriftungskopf für einen Laser (1) ausgebildet ist.

## Claims

1. A device for processing materials and / or generating signs by means of laser rays, whereby there are two refraction components (4, 6) rotating around different axes (5, 7) for the purpose of refracting the laser beams (2), and which are positioned behind one another in the path of the laser beams (2) and have an activation connection with a drive unit (24, 26), by means of which they rotate around their respective rotation axis (5, 7),
characterised in that
the drive units (24, 26) are formed by the drive motor (31; 51, 52) and the actuator (33) of a read / write head of a data storage component with a rotating data storage medium in the form of a disk, whereby the rotation axes (5, 7) of the refraction components (4, 6) are formed by actuator axes.

2. A device according to Claim 1 characterised in that the drive unit (24, 26) encompasses a stage motor (31).

3. A device according to Claim 1 characterised in that the drive unit (24, 26) encompasses a continuous motor (51, 52).

4. A device according to at least one of the preceding claims characterised in that the drive unit (24, 26) encompasses an arm (36) which can swivel around an axis (35), and whereby this arm is connected to the refraction component (4, 6).

5. A device according to Claim 4 characterised in that the refraction component (4) is connected to the swivel arm (36) in such a way that when the arm (36) swivels the refraction component rotates.

6. A device according to Claim 4 or 5 characterised in that the refraction component (4) is connected to the swivel arm (36) by means of a rod-like component (40).

7. A device according to at least one of the preceding claims characterised in that the refraction component (4) is connected to an arm (36) of the read / write head (37).

8. A device according to at least one of the preceding claims characterised in that a sensor component group (56, 57) is provided for the purpose of determining the angle and / or position and / or speed of the refraction component (4, 6).

9. A device according to Claim 8 characterised in that one component (56) of the sensor component group (56, 57) is connected to a component (36) which moves together with the refraction component (41), and another component (57) of the sensor component group (56, 57) is connected to a stationary component (35).

10. A device according to Claim 8 or Claim 9 characterised in that the sensor component group (56, 57) is integrated into a regulating circuit (20, 24) for the purpose of regulating the movement of the refraction component (4).

11. A device according to at least one of the preceding claims characterised in that the refraction component (4, 6) is formed as a reflector.

12. A device according to at least one of the preceding claims characterised in that the drive unit (24, 26) has an activation connection with an electronic control or regulating unit (20).

13. A device according to Claim 12 characterised in that the electronic control or regulating unit (20) encompasses the drive controller (16) of a data storage component.

14. A device according to at least one of the preceding claims characterised in that it is formed as an inscription head for a laser (1).

## Revendications

1. Dispositif pour l'usinage de matériaux et/ou la production de marquages ou gravures par faisceaux ou rayons laser avec deux éléments de déviation (4,6) rotatifs autour d'axes différents (5,7) pour la déviation de faisceaux ou rayons laser (2), qui sont disposés successivement dans la marche des rayons des faisceaux laser (2) et qui sont en liaison active avec respectivement une unité d'entraînement (24,26) au moyen de laquelle ils peuvent basculer ou pivoter autour de leur axe de rotation respectif (5,7),
caractérisé en ce que,
les unités d'entraînement (24,26) sont formées respectivement par le moteur d'entraînement (31 ;51,52) et l'organe d'actionnement (33) d'une tête d'écriture-lecture, d'une mémoire de données avec un support de données en forme de disque rotatif, les axes rotatifs (5,7) des éléments de déviation (4,6) étant formés par les axes de l'organe d'actionnement.

2. Dispositif selon la revendication 1, caractérisé en ce que,
l'unité entraînement (24,26) comprend un moteur pas à pas (31).

3. Dispositif selon la revendication 1, caractérisé en ce que,
l'unité entraînement (24,26) comprend un moteur continu (51,52).

4. Dispositif selon au moins l'une des revendications précédentes, caractérisé en ce que,
l'unité d'entraînement (24,26) présente un bras basculant ou pivotant (36), raccordé à l'élément de déviation (4,6).

5. Dispositif selon la revendication 4, caractérisé en ce que,
l'élément de déviation (4) est relié avec le bras basculant ou pivotant (36) de manière à effectuer un mouvement de rotation pur lors du basculement du bras (36).

6. Dispositif selon la revendication 4 ou 5, caractérisé en ce que,
l'élément de déviation (4) est raccordé au bras basculant (36) par l'intermédiaire d'un élément constitutif en forme de barre (40).

7. Dispositif selon au moins l'une des revendications précédentes, caractérisé en ce que,
l'élément de déviation (4) est raccordé à un bras de lecture/écriture (36) de la tête de lecture/écriture (37).

8. Dispositif selon au moins une des revendications précédentes caractérisé en ce qu'il est prévu un module capteur (56,57) pour déterminer l'angle et/ou la position et/ou la vitesse de l'élément de déviation (4,6).

9. Dispositif selon la revendication 8, caractérisé en ce qu'un élément (56) du module capteur (56,57) est relié à l'élément constitutif mobile (36) conjointement avec l'élément de déviation (41) et en ce qu'un autre élément (57) du module capteur (56,57) est relié à un élément constitutif stationnaire (35).

10. Dispositif selon la revendication 8 ou 9, caractérisé en ce que, le module capteur (56,57) est intégré dans un circuit de réglage (20,24) pour la régulation du mouvement de l'élément de déviation (4).

11. Dispositif selon au moins l'une des revendications précédentes, caractérisé en ce que,
l'élément de déviation (4,6) est conçu sous forme de miroir.

12. Dispositif selon au moins l'une des revendications précédentes, caractérisé en ce que,
l'unité d'entraînement (24,26) est en liaison active avec une unité électronique de commande ou de régulation (20).

13. Dispositif selon la revendication 12, caractérisé en ce que,
l'unité de commande ou de régulation électronique (20) comprend l'organe de commande de lecteur (16) d'une mémoire de données.

14. Dispositif selon au moins l'une des revendications précédentes
caractérisé en ce que qu'il est conçu comme tête de marquage pour un laser (1).
